# EUROPEAN PATENT APPLICATION

(11) **EP 1 650 128 A1**
(43) Date of publication of application: **26.04.2006**
(21) Application number: 04256568.9
(22) Date of filing: 25.10.2004
(51) Int. Cl.: B65B 5/08, B65B 25/00, B65B 5/04

(54) **A transfer apparatus and method and a transfer apparatus cleaner and method**

(71) Applicant: Johnson and Johnson Vision Care, Inc., Jacksonville, FL 32256 (US)
(72) Inventor: Widman, Michael F., Jacksonville, FL 32223 (US); Schlagel, Mark E., Jacksonville, Florida (US); Dolan, David, Jacksonville, Florida (US); Abrams, Richard W., Jacksonville, FL 32256 (US)
(74) Representative: Mercer, Christopher Paul

(57) **Abstract**

A method and apparatus for transferring a wet object, such as a contact lens comprising a probe (93) having a passage (124) for at least one vacuum source, and a tip (94) at one end of the probe for receiving the wet object, the tip comprising at least one aperature (126), the aperature being in communication with the passage; and the passage having at least one relief hole (123) to provide for gas flow into the passage when the wet object is present over the aperature on said tip. A cleaning apparatus and method for a transfer apparatus for a wet object, comprising means (111) for directing at least one source of fluid at said transfer apparatus at a location on said transfer apparatus above the expected location of a wet object on the transfer apparatus. A transfer apparatus for a wet object comprising a probe, means for receiving on said probe said wet object from a first station, and means for aligning said transfer apparatus with said first station to prevent damage to said wet object.

## Description

### CROSS REFERENCE TO RELATED APPLICATIONS

This application claims the benefit of U.S. Provisional Application Serial No. 60/374,007, filed on April 19, 2002, which is a continuation-in-part of U.S. Patent Application Serial No. 09/818,725, titled "Method and Apparatus for Washing or Hydration of Ophthalmic Devices", incorporated herein by reference.

### FIELD OF THE INVENTION

The present invention relates to a method and apparatus for transferring wet objects, such as contact lenses, from one station to another.

### BACKGROUND OF THE INVENTION

The molding of hydrophilic contact lenses is known. Various processes are disclosed in U.S. Patent No. 4,495,313 to Larsen; U.S. Patent No. 4,640,489 to Larsen, et al.; U.S. Patent No. 4,680,336 to Larsen et al.; U.S. Patent No. 4,889,664 to Larsen et al.; and U.S. Patent No. 5,039,459 to Larsen et al., all of which are assigned to the assignee of the present invention.

These prior art references disclose a contact lens production process wherein each lens is formed by molding a reactive mixture between a front curve (lower mold section) and back curve (upper mold section). Typically, the lenses are carried in a mold array or pallet, such as a two-by-four or two-by-eight array. While in between the front and back curves, the monomer is polymerized to form the lens. In one type of process, the lens is removed from the front curve mold during a hydration step and then washed by the application of a hydrating deionized (DI) water to remove processing chemicals, e.g. diluents, from the lens.

Sometimes, when deionized water is used in the hydration, the final step of the process is to introduce a buffered saline solution into the final package holding the lens (after lens transfer to the package), and then seal the lens within the package so that the final lens equilibrium (ionic neutralization, final hydration and final lens dimensioning) is accomplished in the package at room temperature or during sterilization. U.S. Patent No. 4,961,820, also assigned to the assignee of the present invention, discloses a final package for a contact lens, wherein the package is formed from a transparent plastic material such as polypropylene and a foil laminate that is heat sealed thereto.

The transfer of soft contact lenses during manufacture has been a significant problem. The lenses are small, are nearly invisible and are particularly hard to handle when immersed in the fluids commonly used in the manufacturing process. Accurate and reliable transfer of the wet lenses from one location to another or to a final package are often necessary during the manufacturing process.

As apparent from the foregoing, a need exists for an apparatus to transfer wet lenses from one station, such as a mold or hydrating bath, to another station, such as a package.

U.S. Patent No. 5,578,331, entitled "Automated Apparatus and Method for Preparing Contact Lenses for Inspection and Packaging", also assigned to the assignee of the present invention, discloses a robotic arm for transferring a plurality of soft contact lenses from a first processing station to a second processing station. The robotic device includes an adjustable array of convex contact lens carriers. The specification of U.S. Patent No. 5,578,331 is herein incorporated by reference.

U.S. Patent No. 5,561,970, which also is owned by the assignee of this application, discloses an automatic contact lens transfer system, comprising robotic arms to contact and transfer soft contact lenses. The '970 patent is hereby incorporated by reference. U.S. Patent No. 5,706,634, which also is owned by the assignee of this application, discloses a contact lens transfer device which comprises a convex lens transfer surface onto which the lens is secured via surface tension. The device then transports the lens to a second location. The lens is removed from the convex lens transfer surface when an amount of deionized water is ejected from the device. The '634 patent is hereby incorporated by reference.

Additionally, US Serial No. 09/252,287 (VTN-418) entitled "Contact Lens Transfer and Material Removal System", owned by the assignee of this application, discloses a contact lens transfer device which comprises a probe having a convex lens transfer surface onto which the lens is secured via vacuum pressure, and subsequently removed from the probe by a pressurized fluid. The probe is surrounded by a hood having a vacuum source that provides for the removal of the hydrating solution or other matter from the lens and avoids the splatter of liquid from a lens onto the packaging during the removal of the lens from the probe by the pressurized fluid. US Serial No. 09/252,287 (VTN-418) is incorporated herein by reference.

Oftentimes, the lens transfer devices disclosed in the prior art which pick up wet lenses are submerged in a liquid while picking up a lens, and some of the liquid enters the probe transfer tip. This liquid is subsequently dropped back onto the lens when the lens is ejected from the probe or transfer tip assembly via the pulse of pressurized air or fluid. This liquid, referred to as dropped liquid, is undesirable because it is variable. The dropped liquid varies in quantity and is sometimes aerated and frothy. Depending upon subsequent steps in the manufacturing line, the dropped liquid may cause acceptable lenses to be rejected because of the froth, or the addition of the dropped liquid may interfere with the precise filling or pH of a liquid in a final package. Also, the dropped liquid may be or contain an undesireable solvent that is desireably removed from the wet object prior to final processing. For contact lenses, useful solvents for lens cleaning and hydration have been disclosed in the prior art, and are known to a person of ordinary skill in the art. These problems are addressed by this invention.

Further, sometimes a lens does not transfer eventhough the pressurized fluid is ejected from the tip of the probe or transfer tip assembly. The lens may adhere to the probe in a squeued fashion, and additional doses of pressurized fluid may not remove the lens. This may result in packages receiving no lenses or multiple lenses. This problem is addressed herein also.

Also, the lenses are easily crushed by the contact of the probes against the lenses. A transfer apparatus with an improved mechanism for moving the probe adjacent to the lenses is disclosed herein.

### BRIEF SUMMARY OF THE INVENTION

The invention is concerned with the transfer of wet objects or contact lenses, particularly wet contact lenses. Other wet objects include medical devices and other hydrogel products. The description will focus on the transfer of contact lenses; however, it is understood that this invention is applicable to wet objects and is not limited to conact lenses. The transfer of the wet object is accomplished by using a transfer apparatus comprising a probe which is used to pick up and later release the wet object. The transfer apparatus preferably handles the wet object using positive and negative pressure. The invention provides a transfer apparatus having relief holes or openings which provide for gas flow into the vacuum passages after the probe receives or picks up a lens. The relief holes or openings provide for gas flow, which is typically air flow into the probe behind the lens on the probe after lens pick up which removes liquid (or gases or vapors, the term liquid will be used) that would otherwise become trapped behind the lens until the lens is removed from the probe.

The invention also provides for a washing station or cleaning apparatus that is used to remove lenses that do not transfer from the probe either due to a malfunction of the pressurized fluid removal step or due to the adhesion of the lens to the lens transfer tip despite an application of the pressurized fluid to remove the lens. The cleaning station comprises means for directing fluid at said transfer apparatus, preferebly at said probe, at a location on said transfer apparatus, prefereably said probe, above the expected location of an unreleased wet object on the transfer apparatus. The fluid may be a liquid or a gas, preferably a liquid. The means is typically a nozzle connected to a source for the cleaning fluid, preferably liquid. Prefereably when used, the cleaning apparatus or the transfer apparatus provides a means for directing the liquid at additional locations on the probe. Preferably, the liquid contacts the probe at a location above the expected location of an unreleased wet object and then at locations closer and closer to the bottomost portion of the tip preferably by slowly moving the probe out of the washing station while the cleaning liquid is sprayed at said probe. Alteratively, the means for directing the liquid could be by mechanically changing the direction of the nozzle. For example, the nozzle could first direct the liquid at a location above the expected location of a wet object, and then subsequently move to direct cleaning liquid at the expected location of the wet object.

This invention also provides a transfer apparatus comprising at least one probe, alignment pin, stand pin, compliance spring, centering cone and cone seat which provide means for the probe or plurality of probes to align themselves with the plane of the top of the station to which the probes are moving adjacent to. This invention provides for the proper location of the transfer apparatus comprising one or a plurality probes above, adjacent to or in contact with one or a plurality of lenses in a first station for the pickup of the lenses. Additionally, the alignment means can also be used to locate the probes for the proper placement of the lenses at a second station. Alternatively, the station could be moved toward the transfer apparatus, and the transfer apparatus could remain stationary. Although movement of the stations is contemplated by this invention, the invention will be described with reference to an embodiment in which the transfer apparatus moves and the stations from and to which the wet objects are removed and deposited remain stationary.

In a preferred embodiment, the invention comprises a probe or transfer tip assembly with a perforated hemispherical tip having a diameter and shape corresponding to the contact lens shape. (The terms probe and transfer tip assembly will be used interchangeably herein.) The probe is moved into close proximity, and more preferably into contact with the lens' concave surface while in a first station, such as a hydration tray or first carrier or holder, such as a front curve mold, and picks up the contact lens from the holder by vacuum force, which creates suction at the tip of the probe, via an aperture located at the tip. The suction due to drawing the vacuum draws the lens from the holder onto the tip of the probe. Alternatively, the lens could be pushed onto or placed onto the probe, and held onto the tip by the vacuum drawn within the probe.

The probe is then moved and relocated over a second station, e.g. container, carrier or package into which the lens is to be deposited. In a preferred mode, once the lens is lifted by the probe out of the front curve mold, the vacuum remains on until the probe has been positioned over the second station, carrier or package. With the provision of relief holes or openings to the vacuum passages, the vacuum remains on to remove any liquid from the probe and vacuum passages that entered the transfer tip of the probe when the probe picked up the lens. The liquid was either from the lens or from submerging the transfer tip in a liquid from which the lens was picked up from in the first station or both. The liquid is removed from the probe by the vacuum. The flow of gas or air into and through the passages in the probe, and preferably the transfer apparatus vaporizes and or atomizes the liquid on or above the lens in the probe, and removes it from the probe, and preferably from the transfer apparatus.

Once the transfer apparatus is in the proper location over the second station, one or more short, controlled pressure pulses of fluid, either liquid or gas, preferably liquid, are supplied from the probe to eject the lens. As a result, the contact lens is ejected from the probe into a second container, e.g. the package, by at least one pressure pulse. This results in placement of the contact lens into a second container. The transfer apparatus of this invention avoids the dropped liquid from interfering with the additional steps in the processing of the contact lens. The relief holes or openings make it possible for the vacuum to draw away any excess liquid present in the probe behind the lens so that the lens without the dropped liquid is ejected from the probe in the ejecting step. In the prior art probes, once the lens was picked up typically the vacuum was shut off which held the dropped liquid behind the lens until the ejecting step occurred using a pressurized fluid. Alternatively, if the vacuum remained on, there was no air flow to provide for the removal of the dropped liquid; therefore, it remained in the probe behind the lens. The provision of the relief holes in the vacuum passages in the probe significantly decreases the amount of dropped liquid.

In another respect, the method of the invention transfers a wet object from a first container to a second container. In the most preferred embodiment, this process includes the steps of locating a probe having a nozzle adjacent the object in the first container, creating a vacuum in the nozzle to draw the object to the nozzle, maintaining the vacuum while the probe is located near a second container, shutting off the vacuum in the probe, and providing a pressurized fluid in the nozzle to release the object.

### OBJECTS OF THE INVENTION

It is therefore an object of the invention to provide a method and apparatus for transferring wet flexible objects, such as contact lenses, from one station to another.

Another object is to provide a method and apparatus for pickup and transfer of wet flexible molded parts and removing the liquid that might enter the probe from the probe so it is not dropped into the second station with the molded part during the transfer of the molded part.

An additional object is to provide a method and apparatus for transferring a wet object, such as a contact lens, from one station to another which uses a probe to remove the lens from the first station by vacuum pressure and transfer it to the second station where it is deposited by applying a pressurized stream or pulse of air or liquid through the probe to the object, and to provide for the controlled location of the probe adjacent to the wet objects to avoid damaging the wet object by the transfer tip.

A further object is to provide an apparatus for removing lenses from the probe or transfer tip if they fail to transfer from the tip.

Yet a further object is to provide a method and apparatus for transferring a wet object which prevents contamination of the heat seal area of the package. In this design, the vacuum is turned on within the transfer tip before moving the transfer tip or second container after transfer of the lens into the second container.

Another object is to provide a method and apparatus for cleaning or removing objects from the probe or nozzle not deposited at the second station prior to repeating the picking step.

Another object is to provide a method and apparatus for ensuring that the spacing between the probe or nozzle can not be closer to the lens than a specified distance, thereby, reducing risk of lens damage.

### BRIEF DESCRIPTION OF THE DRAWINGS

Other objects and advantages of the present invention will become apparent upon reference to the following specification and annexed drawings in which:
Fig. 1 is a front view of the transfer apparatus in lens pick up position in the hydration tray.
Fig 2 is a partial cross-sectional side view of the transfer apparatus showing the vacuum and fluid passages and relief openings.
Fig. 3A is a partial side view of the transfer apparatus just before lens placement in a package.
Fig. 3B is a partial side view of the transfer apparatus at its lowest position in a package during lens placement.
Fig 3C is a partial side view of the transfer apparatus still in a package, but retracting upward during the lens placement process.
Fig 3D is a partial side view of the transfer apparatus above a package after the lens placement process. ,
Fig 4 is a side view of the transfer apparatus engaged on the hydration tray.
   (The probes are removed for clarity).
Fig 5A is a partial side view of the transfer apparatus engaged in the cleaning station at the beginning of the cleaning process.
Fig 5B is a side view of the transfer apparatus retracting upward out of the cleaning station during the cleaning process.
Fig 5C is a side view of the transfer apparatus retracted completely out of the cleaning station during the cleaning process.
Fig 6 is a front view of the transfer apparatus and cleaning station after the cleaning process has been completed.
Fig 7 is an enlarged cross-sectional view of the probe.

### DETAILED DESCRIPTION OF THE INVENTION

The invention is preferably directed to a method and apparatus for transferring a contact lens, typically a wet contact lens, during and between various steps of manufacture and packaging. One set of these manufacturing steps is disclosed in U.S. Serial No. 09/252,307 (Our docket No. VTN-420), filed herewith in which transfer is necessary from a station at which washing and hydration of the lens takes place, in a front curve mold, to a final package designed for customer use. Additionally, U.S. Serial No. 09/818,725 (Our docket No. VTN-533) which discloses a hydration system is incorporated in its entirty herein by reference. Alternatively, this apparatus could be used to transfer a lens from a reusable mold to a contact lens package, or from a mold to a container for inspection of the contact lens, or from any other first position to a second position.

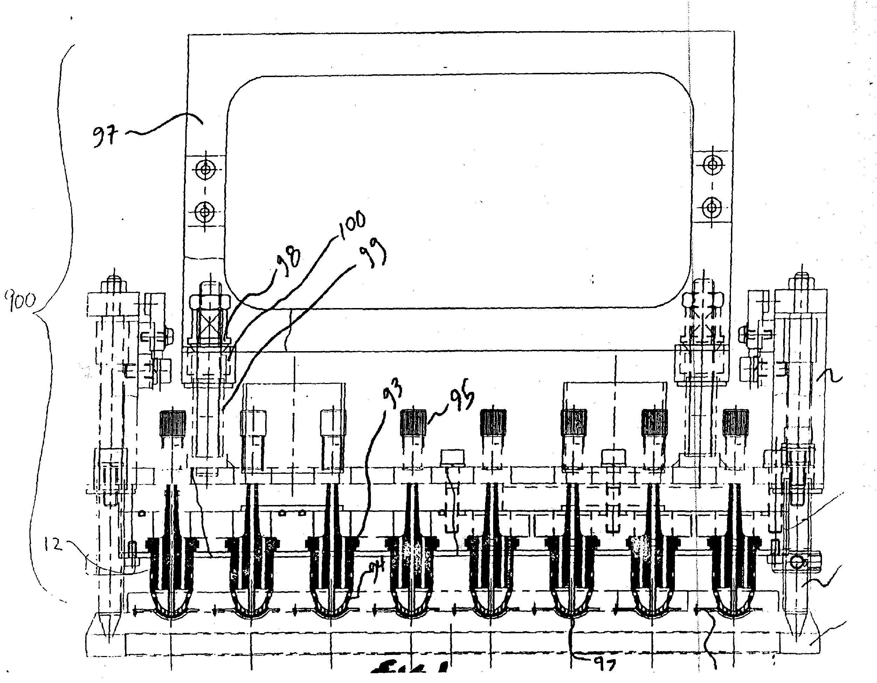

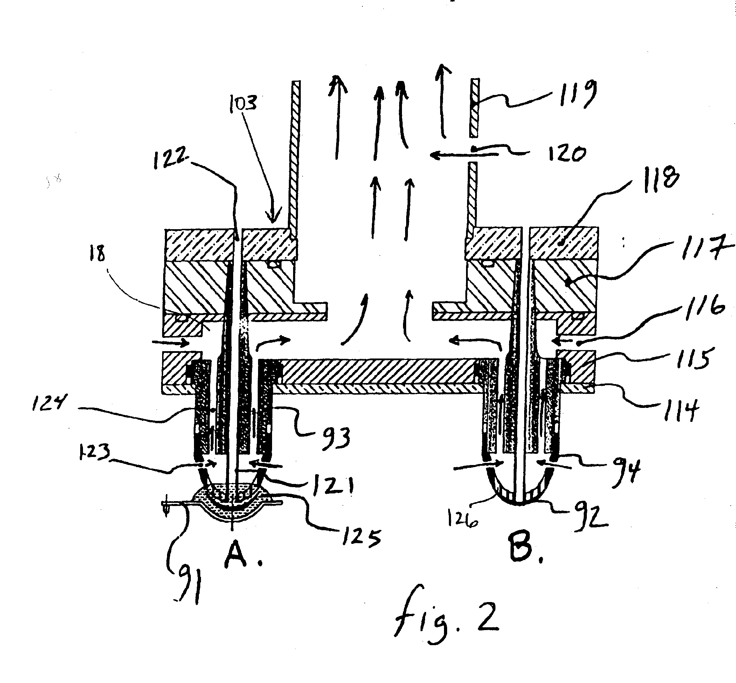

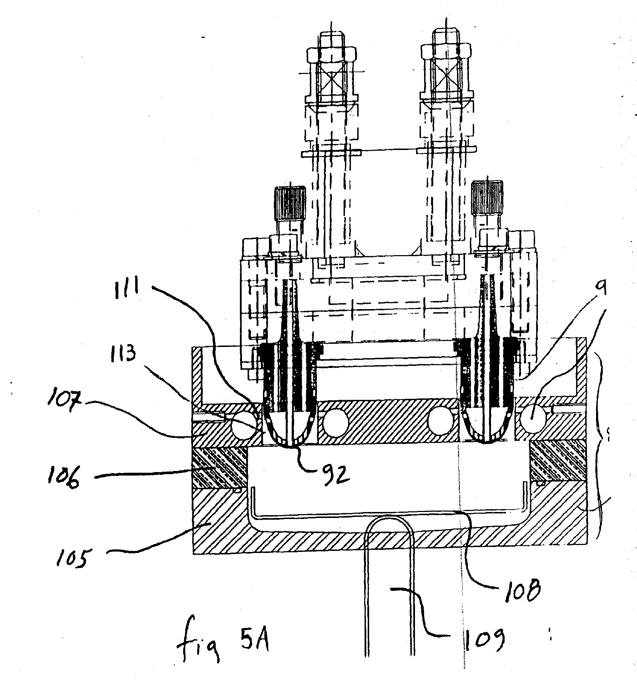

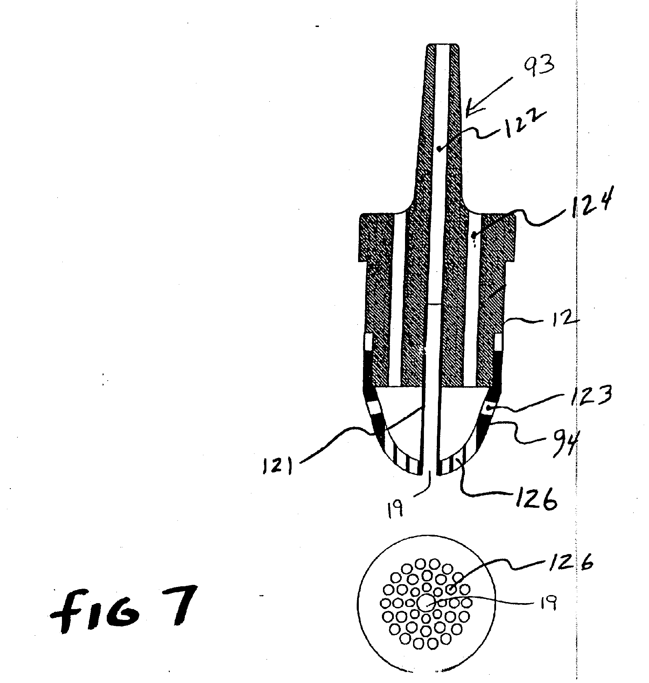

A transfer apparatus 900, as shown in Figure 1 comprises a drive support bracket 97 , manifold 103, and a plurality of transfer tip assemblies or probes 93. Not shown is a drive means, such as a motor and/or pneumatic cylinder that moves the transfer apparatus via attachment of the motor or cylinder to the drive support bracket 97. Other functional components include the alignment pin or pins 96, alignment pin housings 128, centering cones 98, cone seats 100, pre-loaded compliance springs 99, and stand pins 127 as shown in Figure 1 and Figure 4. Preferably the transfer apparatus 900 comprises a two by eight array or sixteen probes or transfer tip assemblies 93 of which eight are shown in Figure 1. Additional details of the probe or transfer tip assembly 93 and manifold 103 are shown in Figure 7.

Referring to Figures 1 and 2 and 7, in the preferred embodiment, the probe 93 is shown comprising a tubular barrel 12, and a tip 94, which are separate pieces, but could be a single piece. The tubular barrel 12 has at least two central passages, one referred to as the passage 124 and the second referred to as the fluid ejection tube 121. The passage 124 is connected to a vacuum source (not shown) via passage 18 through the manifold and which communicates with vacuum connection 119. The fluid ejection tube 121 communicates with a source of fluid (not shown) connected to a tube fitting 95 which communicates with ejection fluid passage 122 to fluid ejection tube 121. The fluid ejection tube 121 is separate from and does not communicate with the passage 124. The passage 124 preferably communicates with multiple perforations or aperatures 126 in the tip 94. The fluid ejection tube 121 communicates with aperature 19 in the tip; however multiple aperatures could be used. The probe is of any suitable material, for example, a high density, polyetheretherketone (PEEK).

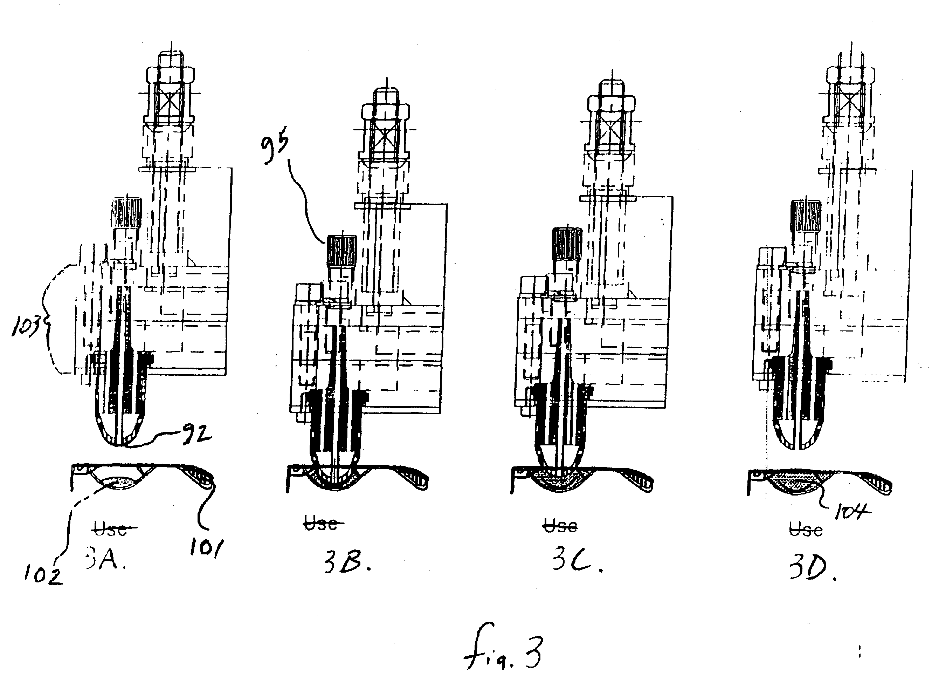

The probes 93 fit into the manifold 103. Lenses 92 are picked out of a first container, e.g. a hydration tray 90 in the following steps. The vacuum is present at the vacuum connection 119 which communicates through the manifold 103 which communicates through passage 124 in the probe 93 which communicates through the apertures 126 in the transfer tip 94. The transfer apparatus 900 preferably comprises two vacuum connections 119. The manifold 103 is lowered downward onto the hydration tray 90 via the drive support bracket 97 until all four stand pins 127 have made complete contact with the horizontal surface of the hydration tray 90 as shown in Figure 1 and Figure 4. A liquid 125, such as DI water, associated with the hydration process and residing above the lens 92 as shown in figure 2, side A is sucked through the holes 126 and accellerated with more airflow from transfer tip side openings 123. Although this description specifies deionized (DI) water 125, any liquid or solvent could be present in the first container. The water-air mixture then passes through passage 124 after which it is further accellerated and dilluted by air comming through manifold openings 116. The water-air mixture passes vertically through manifold plates 114, 115, 117, 118 and into the volume defined by vacuum connection 119 where it is finally accellerated and dilluted with air comming from connection opening 120. Openings 123, 116 and 120 are the relief holes.

At the time that the manifold 103 is lowered by the drive support bracket 97 and the stand pins 127 stop the manifold 103 from moving any further downward, the drive support bracket 97 continues downward for 1-2mm. During this overdrive period the pre-loaded compliance spring 99 compresses and the centering cones 98 disengage from the cone seats 100. This allows the manifold 103 to become compliant to the first station, the hydration tray 90, thereby, ensuring a consistent gap between the the bottom of the tranfer tip 94 and the inside bottom of the frontcurve mold 91. The compliance function also assures that the lens 92 is not crushed and damaged by the transfer tip 94. The gap spacing is defined by the length of the stand pins 127. A typical gap spacing is 0.3-1.0mm.

Once most or all of the DI water 125 that was present in the front curve 91 is sucked away as described above, the lens 92 is adhered by vacuum force to the transfer tip 94 covering most or all of the holes 126 as shown in figure 2 side B. At this time, the drive support bracket 97 is driven upwards. When the centering cones 98 engage the cone seats 100, the manifold 103 also begins its upward movement thereby completing the lens pick up sequence. A typical vacuum is between 5 to 15 kPa, preferably 9 kPa. The time that the probe is in the first container is usually 0-1.5 seconds, preferably 0.5 seconds.

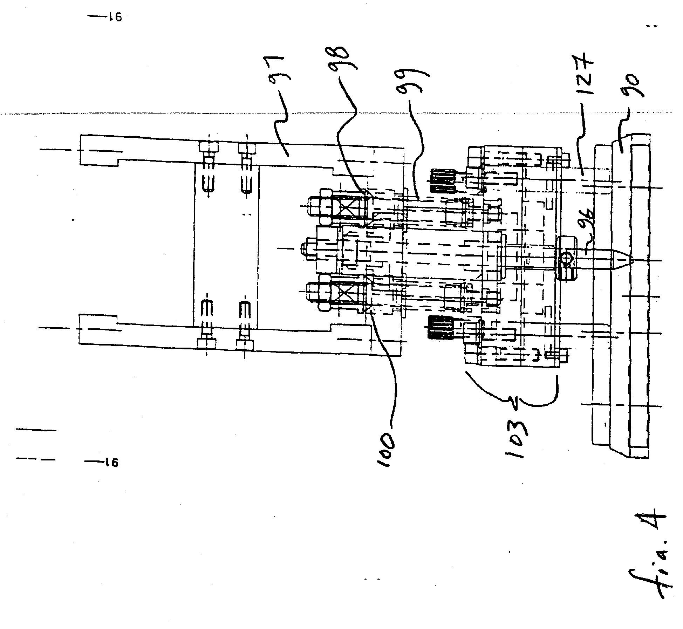

Referring to Figures 3A, 3B, 3C, and 3D, lenses 92 on the one or more probes are placed into one or more second containers, e.g. packages 101 in the following steps: The manifold 103 is lowered downward inserting the tip of a probe into a package 101 as shown in figure 3. As shown, the package 101 has an optional fluid 102 therein, eg, saline solution, DI water pre-dose, or other fluid or solvent already residing in the well from a previous pre-dose process step. The DI water pre-dose 102 is added to the package to prevent air from being trapped between the lens 92 and the bottom of the well of the package 101 during the the lens placement process. Air trapped in this location can cause false rejects in a later lens inspection process not described herein. Typical DI water pre-dose 102 volumes are between 200-700 microliters. In the preferred embodiment, just before the lens 92 touches the DI water pre-dose 102, the vacuum is turned off. Because of the relief holes, that is, the transfer tip openings 123, manifold openings 116, and connection openings 120, the passages 18 and 124 within the manifold assembly 103 and probe 93 equilibrate to neutral atmospheric pressure. The use of the previously mentioned openings is important in that the liquid from the lens pick up step is completely removed from the passage 124 of the probe 93 and preferably from the passage 18 of the manifold 103 also. Without the openings or relief holes the liquid within the probe would not evacuate, because air flow would be blocked by the lens covering the aperatures 126. The result would be that heavily aspirated liquid, eg, DI water containing surfactant (eg Tween 80) and/or other additives would spill into the second container e.g. package when the vacuum is turned off. Bubbles in this liquid would interfere with a later lens inspection process not described herein.

When the manifold 103 reaches its lowest most position, defined by a gap spacing between the bottom of the transfer tip 94 and the inside well bottom of the package 101 typically of 0.7 - 2.0mm, a measured amount of ejection fluid, preferably, DI water ejection fluid is pumped through tube fitting 95 via ejection fluid passage 122 and fluid ejection tube 121 to aperature 19. The force of this dose on the back of the lens 92 causes it to begin separating from the transfer tip 94. The quantity of ejection fluid is sufficient to disrupt the surface tension adhesion of the lens to the surface of the tip 94, causing the lens to be carried along with the ejection fluid into the second station. The ejection fluid can be a liquid or a gas, preferably a liquid, preferably DI water. The use of DI water will be described, but alternatively, any other liquid or a gas can be used to eject the lens from the tip of the transfer apparatus.

The addition of the ejection fluid, preferably DI water to the package 101 causes the DI water level in the package 101 to rise causing the inside of the transfer tip 94 to become backflooded with DI water as shown in figure 3B. After a time delay of 0.1-1.0 seconds from the start of DI water ejection dosing the manifold 103 begins to retract upwardly. As shown in figure 3C during upward movement separation is achieved between the lens 92 and the transfer tip 94 by the force of gravity and the force of the DI water ejection dose impinging on the concave surface of the lens. As the manifold 103 continues its upward movement DI water ejection dosing completes its cycle. Typically, the dose cycle lasts for 2-4 seconds and 300-1000 microliters of DI water is pumped. Once the tip 94 is clear of the final dose level 104 as depicted in figure 3D the vacuum in the probe 93 is again turned on via passage 124 to evecuate any DI water which remains in the transfer tip 94 from the backflooding. It is important that this backflooded water (dropped liquid) not drip onto the package 102 particularly in the heatseal area. Dropped liquid in the heatseal area can cause package seal integrity problems during a later heatseal process, not described herein. The transfer process can then be repeated to pick up from a different one or more first containers to a different one or more second containers by movement of the transfer head to a location above an array of first containers, then with the vacuum still on or turned on again, preferably still on, the manifold with probes is lowered to the first station and the process described above is repeated. Although not described above for the second station, the same method of aligning the transfer apparatus using the stand pins, centering cones, and cone seats is preferably repeated when locating the transfer apparatus for placement of the lenses into the second station as described for locating the transfer apparatus over the first station. In the preferred embodiment the second station is a transfer station comprising an array of packages into which the lenses are placed. The preferred transfer station comprises a surface for reciept of the stand pins of the transfer apparatus.

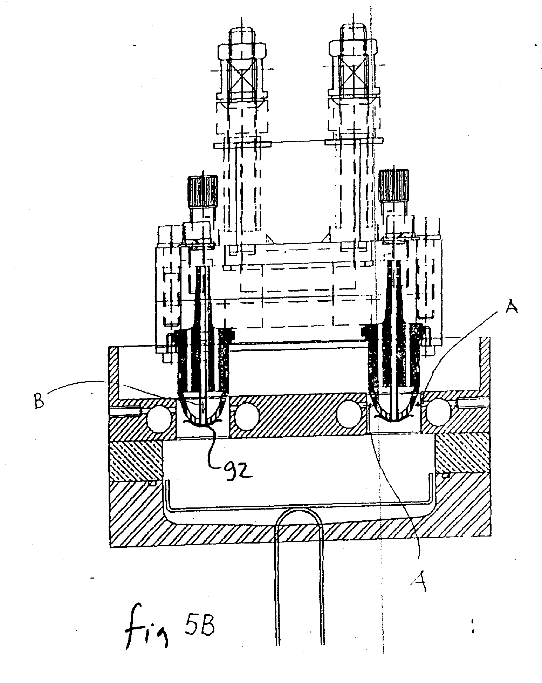

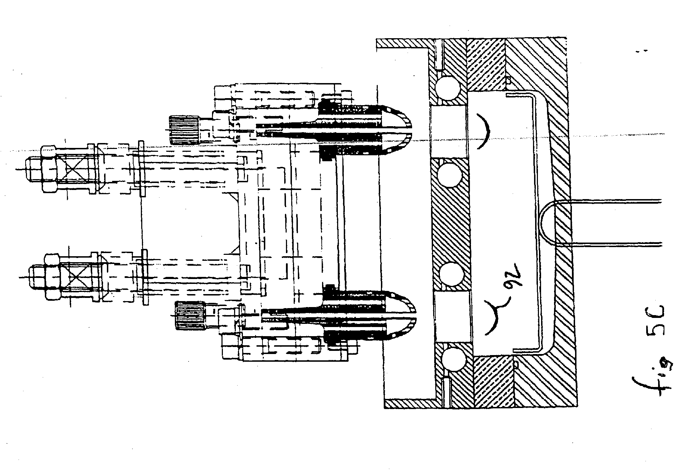

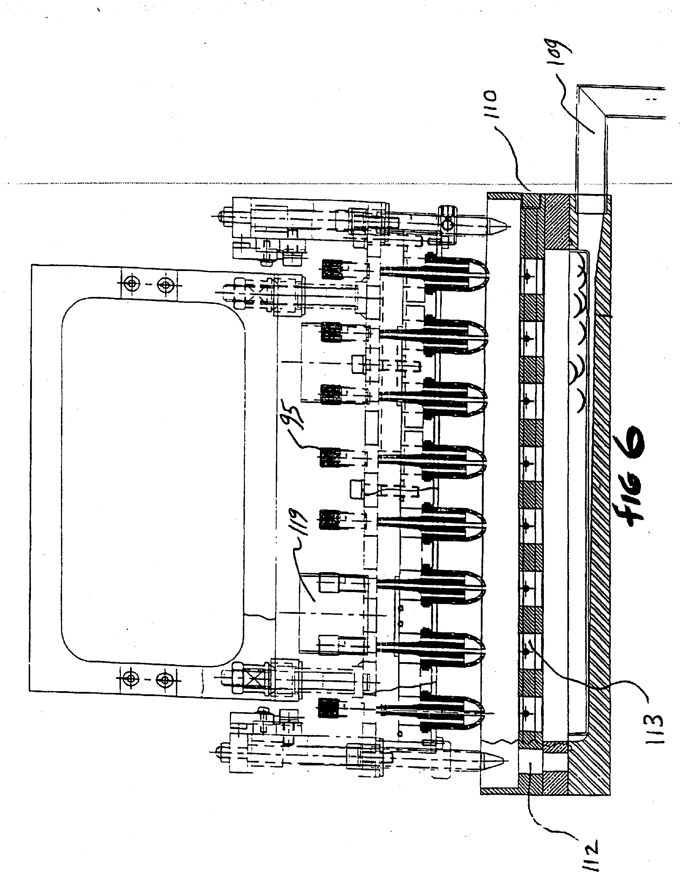

Occassionally, not all the lenses are successfully transferred to the second station, e.g. package 102. When this happens, a non-transferrred lens is typically left hanging from the transfer tip 94. When a next set of lenses are picked from the hydration tray, a non-transferred lens sticks to the lens being picked up and two lenses then adhere to the transfer tip 94. During the subsequent transfer into packages a "double" lens is deposited. The double lens will then be rejected by a later lens inspection process herein not described. Thus, two lenses are rejected from the process when the non-conformity was caused only by the first lens not being properly deposited. To reduce the loss to just the original non-transferred lens, a cleaning station is provided. The cleaning station comprises means for spraying fluid at a probe, and preferably a catch basin. The fluid may be a gas or liquid preferably a liquid. The preferred cleaning station 800 is shown in Figures 5A, 5B, 5C and 6. The preferred means for spraying the fluid in the cleaning station 800 is cleaning nozzles 111. Preferably there are at least two cleaning nozzles 111 for cleaning each probe 93. The cleaning station 800 preferably comprises a catch basin 801 which can be a single housing, but is shown as comprising several pieces. The preferred catch basin 801 provides almost a complete enclosure into which the probes are inserted. The catch basin 801 comprises orifices 113 into which the probes 93 are each at least partially inserted. Preferably the probes are inserted such that the nozzles 111 direct cleaning fluid, eg, water upon the transfer tip 94 at a location above which a lens 92 is typically carried by the transfer tip 94. Preferably the entire transfer tip 94 is inserted into the orifice. The orifices 113 are sized to be only slightly bigger than the diameter of the transfer tip or barrel of the probe to prevent water from splashing out of the catch basin 801. Preferably the nozzles 111 are located in the orifices 113; however one or more nozzles could be located any where as long as the cleaning fluid can be directed at or flows down or onto the transfer tip.

Figure 5A, 5B, 5C and 6 show a catch basin 801 comprising multiple pieces; however, it could be made of a single piece. As shown the catch basin 801 comprises a trough 105 attached to a spacer plate 106, attached to a cleaning orifice plate 107. Positioned within the catch basin 801, in the trough 105 is a lens screen 108 and a drain passage 109. The preferred material to make the cleaning station components is stainless steel.

The method of cleaning the transfer apparatus is described herein in the following steps: After every 2-10 lens pickup and placement sequences the transfer apparatus preferably comprised of a drive support bracket 97 , manifold 103, and sixteen transfer probes 93 in a two-by-eight array moves to the cleaning station. The cleaning step could alternatively be repeated after every pickup and placement sequence or alternatively after more than ten pickup and placement sequences depending upon the cleaning demands for a transfer system. Referencing figures 5A, 5B, 5C, and 6, the transfer apparatus 900 is lowered to a position shown in figure 5A such that the probes 93 are fully engaged into the cleaning orifices 113. The vacuum in the probes 93 which was preferably on since performing the last transfer step, is now turned off, or turned off when the probes are positioned above the orifices 113. Once in the orifices 113, preferably the same ejection fluid used in the transfer process is ejected from the tip of the probe, and a cleaning liquid is directed at the transfer apparatus. Alternatively, the cleaning liquid may be used alone in the cleaning apparatus. In the preferred embodiment, the DI water ejection fluid is pumped through tube fitting 95 and ejection fluid passage 122 and fluid ejection tube 121 and onto the concave back surface of the lens, if any is present on the tip. DI water cleaning liquid is pumped through channels 110 and then through cleaning nozzles 111 at the probe. There are two cleaning nozzles 111, located 180 degrees apart, per cleaning orifice 113. The cleaning liquid pumping sequence typically lasts for 0.5-1.5 seconds and at a flowrate between 20-200ml/min per cleaning nozzle 111. After a delay of 0-1.0 seconds after the DI water cleaning liquid begins flowing directed at the probe, the transfer apparatus 900 is retracted upwardly. During this time DI water continues to flow out of the fluid ejection tube 121 and cleaning nozzles 111. As shown in figure 5B the edges of the stuck lens 92 begin to separate from the transfer tip 94 from the cleaning liquid while the concave section of the lens becomes heavy with ejection fluid. Arrows A in Figure 5B show the direction of the cleaning liquid from the nozzles 111. Arrow B in Figure 5B shows the direction of the ejection fluid from fluid ejection tube 121. The retract speed is adjusted such that the transfer tips 94 are removed from the cleaning orifices 113 after the ejection fluid pumping sequence is finished. Preferably the same pumping sequence (times and amounts) for the ejection fluid used in the lens transfer process (lens placement process) described above is used in the cleaning process. Preferably, the ejection fluid is pumped from aperature 19 for a longer period than the cleaning liquid is directed from nozzles 111 at the transfer tip. As the transfer tip is removed from the orifice, preferably the cleaning liquid stops spraying at the tip and then the ejection fluid stops spraying from the transfer tip. Howver, the spraying can be shut off in any order. As shown in Figures 5C and 6, the lenses removed from the probes are caught on the lens screen 108 while the ejection fluid and/or cleaning liquid from the process flows through the lens screen 108 and into the catch basin 105. The cleaning process will also remove any excess matter accumulated on the transfer tips 94. This can include hema rings, pieces of lens, etc. From there the water flows down a slope to the drain passage 109. Once the probes 93 are retracted out of the orifices 113, the transfer apparatus moves via a drive mechanism not shown back to the lens transfer process described above in reference to Figures 1-4. Alternatively, as mentioned earlier the nozzles for the cleaning liquid in the cleaning apparatus may move to direct the cleaning fluid to various locations on the probe, preferably from a location above the expected location of a lens, if any, and then progressively lower on the probe preferably to the bottomost location on the probe.

Although not described for the cleaning station, preferably when the transfer apparatus is positioned over the cleaning station, the method of aligning the transfer apparatus described above using the stand pins, compliance springs, centering cones, and cone seats is used to properly align the probes with the orifices to avoid any damage to either the transfer apparatus or the cleaning station. For this purpose, preferably the top surface of the cleaning station provides openings 112 for receipt of the stand pins.

The lens transfer methods and apparatus and cleaning apparatus and methods of the invention work effectively over a wide range of lens designs, including monofocal, multifocal, and toric lenses. In addition, the lens transfer methods and apparatus of the invention provide a highly efficient controlled method over previous techniques with the ability to successfully transfer up to and exceeding 99% of the contact lenses.

All patents, applications, publications, and the method mentioned herein are hereby incorporated by reference.

Specific features of the invention are shown in one or more of the drawings for convenience only, as each feature may be combined with other features in accordance with the invention. Alternative embodiments will be recognized by those skilled in the art and are intended to be included within the scope of the claims.

## Claims

1. A transfer apparatus for a wet object comprising:
a probe having a passage for at least one vacuum source, and a tip at one end of said probe for receiving said wet object, said tip comprising at least one aperature, said at least one aperature being in communication with said passage; and said passage having at least one relief hole to provide for gas flow into said passage when said wet object is present over said at least one aperature on said tip.

2. The apparatus of claim 1, wherein said wet object is a contact lens.

3. The apparatus of claim 1, wherein said gas flow removes liquid from within said transfer tip.

4. The apparatus of claim 1, wherein said probe comprises at least one relief hole.

5. The apparatus of claim 4, further comprising a manifold attached to said probe, said manifold comprising at least one relief hole.

6. A method of transferring a wet object located on a transfer apparatus comprising the steps of :
holding a wet object on the tip of a probe by drawing a vacuum within said probe;
providing at least one relief hole in the passage for said vacuum wherein while said vacuum is drawn, gas flows from outside said probe to inside said probe.

7. The method of claim 6, further comprising prior to said holding step, the step of: picking up said wet object from a first station by drawing said vacuum within said probe.

8. The method of claim 7, further comprising after said providing step, the step of: ejecting said wet object into a second station by pressurized fluid.

9. The method of claim 8, further comprising after said ejecting step, the step of: drawing said vacuum in said probe.

10. A cleaning apparatus for a transfer apparatus for a wet object, comprising means for directing at least one source of liquid at said transfer apparatus at a location on said transfer apparatus above the expected location of a wet object on said transfer apparatus.

11. The cleaning apparatus of claim 10, further comprising a basin.

12. The cleaning apparatus of claim 11, further comprising orifices in said basin sized to receive at least part of said transfer apparatus.

13. The cleaning apparatus of claim 10 wherein said means is a nozzle.

14. The cleaning apparatus of claim 10 further comprising a means for directing said fluid to additional locations of said transfer apparatus.

15. A method of cleaning a transfer apparatus for a wet object comprising the steps of:
directing a fluid at the transfer apparatus at a location above the expected location of said wet object on said transfer apparatus.

16. The method of claim 15, further comprising prior to said directing step, the steps of:
providing a transfer apparatus comprising at least one probe; and
inserting said at least one probe into said cleaning apparatus.

17. The method of claim 16, further comprising after said inserting step, the step of:
ejecting fluid from said probe.

18. A transfer apparatus for a wet object comprising:
a probe, means for receiving on said probe said wet object from a first station, and means for aligning said transfer apparatus with said first station to prevent damage to said wet object.

19. The transfer apparatus of claim 18, wherein said means for aligning comprises at least one stand pin, at least one compliance spring, at least one centering cone and at least one cone seat.

20. A method of aligning a transfer apparatus with a wet object to be received by said transfer apparatus from a first station comprising the steps of:
moving a transfer apparatus towards a first station;
engaging a stand pin that stops the gross downward movement of said transfer apparatus towards the first station,
overdriving said transfer apparatus to engage at least one compliance spring, at least one centering cone and at least one cone seat that allows for angular movement of said transfer apparatus relative to said first station.
